## Europäisches Patentamt

## European Patent Office

## Office européen des brevets

(19)

(11) Veröffentlichungsnummer: **0 073 365**
A1

(12)

# EUROPÄISCHE PATENTANMELDUNG

(21) Anmeldenummer: **82107164.4**

(22) Anmeldetag: **07.08.82**

(51) Int. Cl.³: **E 02 B 15/04**

(30) Priorität: **29.08.81 DE 3134208**

(43) Veröffentlichungstag der Anmeldung: **09.03.83**
**Patentblatt 83/10**

(84) Benannte Vertragsstaaten: **FR GB IT NL**

(71) Anmelder: **Fried. Krupp Gesellschaft mit beschränkter Haftung, Altendorfer Strasse 103, D-4300 Essen 1 (DE)**

(72) Erfinder: **Grillo, Michel, Emmastrasse 57, D-4300 Essen (DE)**
Erfinder: **Rost, Jürgen, Gülterberg 30, D-4300 Essen 16 (DE)**
Erfinder: **Müller-Kühn, Helmut, Bokeloher Kirchweg 4, D-4470 Meppen-Helte (DE)**
Erfinder: **Kreuder, Gustav, Baasstrasse 1, D-4300 Essen 11 (DE)**
Erfinder: **Spandick, Walter, Bendmannstrasse 49, D-4130 Moers 2 (DE)**

(54) **Wasserfahrzeug mit Vorrichtungen zum Absaugen und Aufnehmen von auf der Gewässeroberfläche treibenden Stoffen.**

(57) Bei einem Wasserfahrzeug, das auch bei hohem Seegang eingesetzt werden kann und das eine hohe Fahrtgeschwindigkeit bei Fahrten zum Einsatzort hat und dessen Abschöpfleistung gegenüber bekannten Vorrichtungen verbessert werden soll, wird an einem Doppelrumpfschiff mit Seegangsstabilisatoren (4) zwischen den die zu beseitigenden Stoffe, insbesondere Öle aufnehmenden Schiffsrümpfen (1, 1') ein in Bezug auf die Horizontale schräg in das Wasser ragender, mittels einer Endloskette oder eines -bandes (11) motorangetriebener, flüssigkeitsdurchlässiger Filterrechen (5) und ein an dessen aus dem Wasser ragenden oberen Ende in die Filterrechen-Elemente (5') eingreifende, gegenläufig rotierende Reinigungswalze (6), ein quer zur Laufrichtung des Filterrechens (5) waagerecht rotierendes Endlosförderband (12) zur Aufnahme und zum Abtransport in einen Sammelbehälter (13) der von dem Filterrechen (5) und/oder der Reinigungswalze (6) abfallender Feststoffe, ein Ölabscheidebehälter (9), dessen Überlaufkante (17) durch vorgelagerte Steuerschwimmer (8) in der Höhe veränderbar ist und der mit zwei Pumpsystemen ausgestattet ist, die einerseits für das aufgrund seiner größeren Dichte im unteren Ölabscheidebehälterraum gesammelte Wasser und andererseits eine Absaugvorrichtung für das darauf schwimmende Öl bzw. die zu beseitigende Flüssigkeit verwendet wird.

- 1 -

FRIED. KRUPP GESELLSCHAFT MIT BESCHÄNKTER HAFTUNG

in Essen

Wasserfahrzeug mit Vorrichtungen zum Absaugen und Aufnehmen von auf der Gewässeroberfläche treiben- den Stoffen

Die Erfindung betrifft ein Wasserfahrzeug zum Absaugen und Aufnehmen von auf der Gewässeroberfläche treibenden Stoffen, insbesondere von Öl und von anderen organischen Verunreinigungen.

Nach dem Stand der Technik werden zur Ölbeseitigung insbesondere Verfahren bzw. Vorrichtungen verwendet, welche die gegenüber dem Wasser vergleichsweise niedrigere Adhäsionskraft des Öles zu dessen Separation ausnutzen. Zu diesem Zweck werden hydrophobe bzw. oleophile Materialien eingesetzt, die z.B. in Form von flüssigkeitsundurchlässigen rotierenden Scheiben, Endlosbändern oder rotierenden Trommeln verwendet werden. Zusätzlich sind auch Abstreifvorrichtungen, insbesondere bei sogenannten Scheiben- und Bandskimmern bekannt, die das aufgenommene Öl wieder entfernen. Ebenso gehören einzelne Wehre mit Überlaufkanten zum Stand der Technik, aus denen dann das Öl von der Wasseroberfläche abgesaugt bzw. das Wasser abgepumpt wird. Es ist auch schon vorgeschlagen worden, einzelne der genannten Vorrichtungen an Bord eines Schiffes einzubauen, um den Einsatzort des betreffenden Gerätes zur Ölbeseitigung schneller wechseln zu können.

0073365

Allerdings ist nachteiligerweise die Einsatzmöglichkeit der bekannten Vorrichtungen auf eine sehr geringe Wellenhöhe von meist zwei Metern, maximal jedoch drei Metern und eine Windstärke bis maximal 5/6 begrenzt. Dazu sinkt bei extrem hohem Seegang die Abschöpfleistung auf sehr niedrigere Werte. Schließlich ist auch die Einsatzfähigkeit der meisten Vorrichtungen durch die geringe Aufnahmekapazität für das abgeschöpfte Öl limitiert, so daß zusätzliche Mutterschiffe zur Ölaufnahme erforderlich sind, wobei sich insbesondere bei hohem Seegang Probleme bei der Ölübergabe ergeben können.

Es ist daher Aufgabe der vorliegenden Erfindung, ein Wasserfahrzeug mit Vorrichtungen zum Absaugen und Aufnehmen von auf der Gewässeroberfläche treibenden Stoffen, insbesondere Öl anzugeben, das auch bei hohem Seegang eingesetzt werden kann, das eine hohe Fahrtgeschwindigkeit bei Fahrten zum Einsatzort hat und dessen Abschöpfleistung gegenüber den nach dem Stand der Technik bekannten Vorrichtungen verbessert ist.

Diese Aufgabe wird durch ein Wasserfahrzeug gelöst, das einen Doppelrumpf (Katamaran) mit nach dem Stand der Technik bekannten Seegangstabilisatoren zwischen den Schiffsrümpfen, die die zu beseitigenden Stoffe aufnehmen, besitzt. Zwischen den Schiffsrümpfen sind folgende zusammenwirkende Vorrichtungen vorgesehen. Ein schräg in Bezug auf die Horizontale ins Wasser ragender, mittels einer Endloskette oder eines Endlosbandes motorangetriebener, flüssigkeitsdurchlässiger Filterrechen dient zum Abschöpfen von Feststoffen und zerklumpter Ölbestandteile.

0073365

An dessen oberen, aus dem Wasser ragenden Ende ist eine gegenläufig rotierende Reinigungswalze, deren Umlaufgeschwindigkeit größer als die des Filterrechens ist, vorgesehen. Die von Filterrechen und Reinigungswalze abfallenden Feststoffe werden von einem waagerecht rotierenden Endlosförderband aufgenommen und in einen Sammelbehälter abgeführt. Nach Durchlauf des Filterrechens wird die von Feststoffen befreite Flüssigkeit über eine Überlaufkante in einen Ölabscheidebehälter mit zwei Pumpsystemen geführt. Das aufgrund seiner größeren Dichte im unteren Ölabscheidebehälterraum gesammelte Wasser wird nach unten abgesaugt, während das darauf schwimmende Öl bzw. die zu beseitigende Flüssigkeit durch ein zweites Pumpsystem nach oben abgesaugt wird.

Der besondere Vorteil dieses Wasserfahrzeugs liegt darin, daß es auch bei hohem Seegang eingesetzt werden kann und eine gegenüber dem Stand der Technik stark verbesserte Abschöpfleistung besitzt. Darüber hinaus kann das abgesaugte Öl in großer Menge in den Schiffsrümpfen, die entsprechende Sammelbehälter enthalten, gespeichert werden. Schließlich kann dieses Wasserfahrzeug im Gegensatz zu den nach dem Stand der Technik auf ein enges Spektrum von Viskositäten beschränkten Vorrichtungen zur Beseitigung verschiedener Ölmischungen bzw. treibender Flüssigkeiten verschiedener Viskositäten eingesetzt werden.

Nach einer weiteren Ausgestaltung der erfindungsgemäßen Vorrichtung sind der Filterrechen, die Überlaufkante und der Ölabscheidebehälter hebbar bzw.

schwenkbar angeordnet, so daß bei Transitfahrten des Wasserfahrzeuges die Vorrichtungen zur Ölabscheidung über die Gewässeroberfläche angehoben werden. Damit kann der Gesamtfahrwiderstand des Wasserfahrzeugs beträchtlich reduziert werden. Vorteilhafterweise werden der Filterrechen, die Überlaufkante und der Ölabscheidebehälter mittels hydraulischer Hubelemente geschwenkt bzw. gehoben. Vorteilhafterweise ist der Filterrechen, sofern er nicht bei Transitfahrten in die Horizontale geschwenkt ist, im Arbeitseinsatz so angeordnet, daß seine Längsachse in einem Winkel von 30 bis 60$^{\circ}$ zur Horizontalen geneigt ist. Die Filterrechenelemente sind austauschbar, um sie verschiedenen Einsatzbedingungen, z.B. auch bei Treibgut oder geklumptem Öl, anzupassen. Zur Reinigung des Filterrechens dient eine gegenläufig rotierende Reinigungswalze; die Umlaufgeschwindigkeit beim Filterrechen beträgt 1,5 bis 3 m pro Minute. Da der Filterrechen nicht nur reine Festkörper, sondern auch Ölklumpen aufnimmt und abtransportiert, ist die Gefahr gegeben, daß sich Ölrückstände an dem Filterrechen und der Reinigungswalze absetzen. Dieser Gefahr wird vorteilhafterweise dadurch begegnet, daß die Reinigungswalze dampfstrahlgeheizte Metallbürsten besitzt. Die den Filterrechen passierende Flüssigkeit durchläuft anschließend ein in mehrere Segmentkammern eingeteilte Überlaufkante, wobei jede Segmentkammer mindestens einen Steuerschwimmer besitzt, der dazu dient, die Höhe der Überlaufkante zu steuern. Als Pumpe für das in den Ölabscheidebehälter gelangende Wasser wird eine Propellerpumpe verwendet, der ein Kunststoffschaumbandfilter vorgesetzt ist. Dieser hat die Aufgabe ggf. im abzupumpenden Wasser vorhandenes Öl abzufiltern. Vorteilhafterweise wird als Kunststoff-

0073365

schaumbandfilter ein rotierendes Kunststoffschaumband mit einer Abstreifvorrichtung für das Öl verwendet.

Je nach Viskosität des zu beseitigenden Öls empfiehlt
es sich, einen heizbaren Ölabscheidebehälter zu verwenden, um das Öl pumpfähig zu machen bzw. zu halten.
Schließlich befinden sich am Bug der beiden Schiffsrümpfe ausfahrbare Leitbleche, welche die Ölsammelbreite des Wasserfahrzeugs über die Fahrzeugbreite
vergrößern. Diese empfehlen sich immer dann, wenn
die Ölfilmdicke auf dem zu reinigenden Wasser sehr
dünn ist.

Ein Ausführungsbeispiel der Erfindung ist in den
Zeichnungen dargestellt.
Es zeigen:

Fig. 1          eine skizzenhafte Darstellung
                des erfindungsgemäßen Wasserfahrzeugs

Fig. 2          einen Ausschnitt des Wasserfahrzeuges mit den Vorrichtungen zum
                Absaugen des Öls und

Fig. 3          eine Darstellung entsprechend

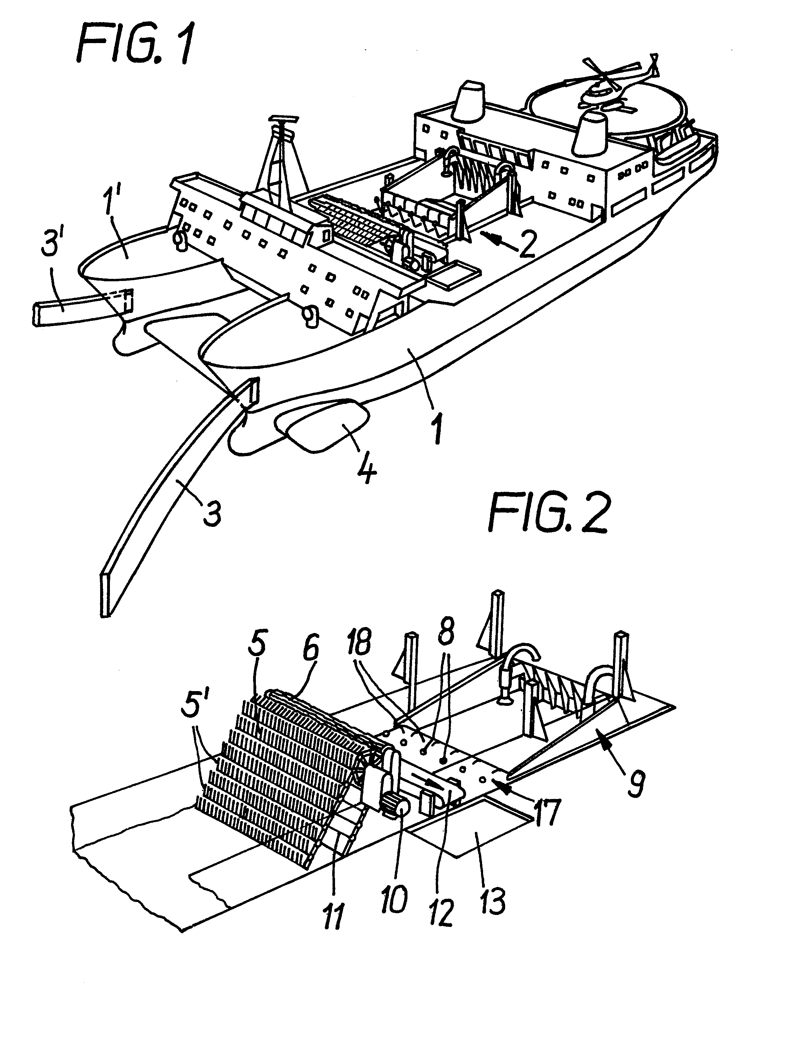

                Fig. 2 in Seitenansicht.

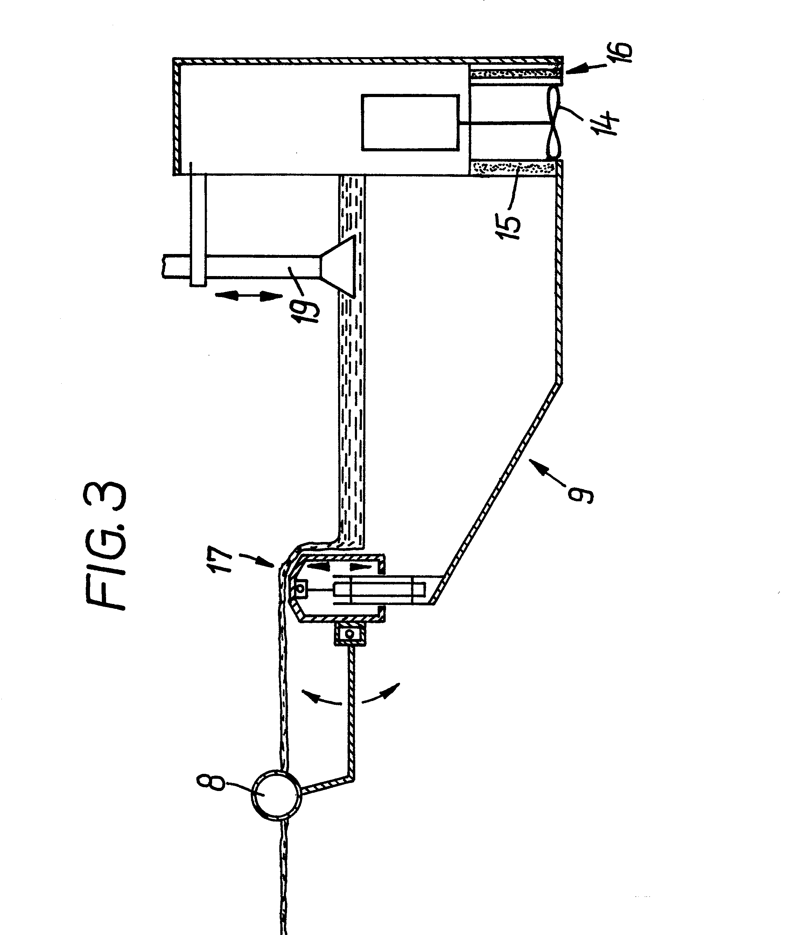

Das in Fig. 1 dargestellte Wasserfahrzeug besitzt
neben den allgemein üblichen Schiffsbestandteilen
insbesondere zwei Schiffsrümpfe 1, 1', in deren
Mitte die in den Fig. 2 und 3 detailliert dargestellte Ölabscheidevorrichtung 2 liegt. Ferner besitzt das Wasserfahrzeug noch zwei, jeweils schräg zur Fahrtrichtung aus- und einfahrbare Leitbleche 3, 3', denen die Funktion zukommt, das neben der Fahrrinne des Wasserfahrzeuges befindliche Öl zu sammeln, um die Wirkungsbreite des Wasserfahrzeuges zu erhöhen.

Schließlich weist das Wasserfahrzeug jeweils am Schiffsrumpf arbeitende aktive Seegangsstabilisatoren 4 auf, wie sie z.B. bei größeren hochseetüchtigen Passagierschiffen üblich sind. Die in Fig. 1 skizzierte Darstellung zeigt das Wasserfahrzeug in Transitstellung, d.h. die im wesentlichen aus dem Filterrechen, der Überlaufkante und dem Abscheidebehälter bestehende Ölabscheidevorrichtung 2 ist mittels entsprechender Hydraulik-Elemente so gehoben bzw. geschwenkt, daß die Ölabscheidevorrichtung über dem Wasserspiegel liegt. Damit ist der Fahrtwiderstand des Wasserfahrzeuges auf ein Minimum gesenkt. Die in Fig. 2 und 3 dargestellte Ölabscheidevorrichtung 2 besteht im wesentlichen aus einem Filterrechen 5, einer Reinigungswalze 6, einer Überlaufkante 17 mit davor liegenden Steuerschwimmern 8 und einem Abscheidebehälter 9.

Der Filterrechen 5 besitzt austauschbare Filterrechenelemente 5'. Der Filterrechen 5 wird über einen Motor 10 sowie ein flüssigkeitsdurchlässiges Endlosband 11 angetrieben und liegt ca. 45 $^{\circ}$ zur Horizontalen geneigt. Zur Reinigung des Filterrechens 5, der etwa zur Hälfte ins Fahrwasser getaucht ist, dient eine schnell rotierende Reinigungswalze 6 mit Metallbürsten. Die Umdrehungsgeschwindigkeit des Filterrechens 5, der kontinuierlich nach dem Paternosterprinzip

0073365

arbeitet, ist auf die Fahrgeschwindigkeit des
Wasserfahrzeuges abgestimmt und liegt zwischen
1,5 und 3 m pro Minute.

Die vom Filterrechen aufgenommenen Feststoffteile
fallen nach Überschreiten des Bandumkehrpunktes
frei auf das darunter angeordnete Endlosförderband 12, das diese in einem Sammelbehälter 13 befördert.
Der Reinigungswalze 6 kommt die Aufgabe zu, die
nicht abfallenden, zum Teil teerigen Ölrückstände
aus dem Filterrechen 5 zu bürsten. Durch diesen
Selbstreinigungseffekt ist jede Filterrechenelementreihe beim Wiedereintauchen in das Wasser zur
optimalen Festkörperneuaufnahme präpariert. Die
nach Durchlauf des Filterrechens verbleibende
Flüssigstoffe fließen über eine mehrsegmentige
Überlaufkante 17. Jedes Segment 18 besitzt einen
Steuerschwimmer 8, der die Höhe der Überlaufschicht
steuert. Der an der Überlaufkante 17 angrenzende,
im wesentlichen quadratisch ausgebildete Ölabscheidebehälter 9 besitzt in seinem unteren Bereich eine
Propellerpumpe 14 zum Abpumpen des Wassers. Damit
nicht Ölrückstände bzw. Öl-/Wasser-Emulsionen mit
abgepumpt werden, ist dieser Propellerpumpe 14 ein
umlaufendes Endloskunststoffschaumbandfilter 15 mit
integrierter Abstreifvorrichtung 16 vorgesehen. Das
in den Ölabscheidebehälter 9 fließende Öl wird mittels
Ölabsaugern 19 nach oben abgeführt, die mit den Ölaufnahmebehältern in den Schiffsrümpfen 1, 1' verbunden sind. Der Ölabscheidebehälter ist heizbar und
besitzt eine höhenverstellbare Überlaufkante 17. Das

Steuerprinzip der zwei getrennten Pumpsysteme mittels entsprechender Steuerschwimmer, Ventile etc. ist nach dem Stand der Technik bekannt, so daß hierauf nicht näher eingegangen zu werden braucht. Das aus dem Ölabscheidebehälter abgepumpte Öl wird jeweils in speziell dafür vorpräparierten Sammelbehältern in den Schiffsrümpfen gelagert.

Die Hochschwenkbarkeit des Filterrechens bzw. die Hebbarkeit des Ölabscheidebehälters einschließlich der Überlaufkante, die ggf. auch getrennt durchführbar sind, ermöglichen nicht nur eine höhere Fahrgeschwindigkeit des Wasserfahrzeuges, um zum Einsatzort zu gelangen, sondern prädestinieren das Wasserfahrzeug für beliebige Einsätze zur Entfernung von auf der Wasseroberfläche schwimmenden Stoffen. So kann z. B., sofern nur Feststoffe von der Wasseroberfläche entfernt werden müssen, bei dem Wasserfahrzeug nur die Filterrechenanlage eingeschaltet werden. Je nach Größe der aufzunehmenden Teile wird die Maschenweite der Filterrechenelemente verändert. Damit eignet sich das erfindungsgemässe Wasserfahrzeug auch z. B. zur Beseitigung der beim sog. Adsorptionsverfahren eingesetzten Streumittel.

0073365

## Patentansprüche

1. Wasserfahrzeug mit Vorrichtungen zum Absaugen und Aufnehmen von auf der Gewässeroberfläche treibenden Stoffen, insbesondere Öl, dadurch gekennzeichnet, daß an einem Doppelrumpfschiff (Katamaran) mit nach dem Stand der Technik bekannten Seegangsstabilisatoren (4) zwischen den die zu beseitigenden Stoffe aufnehmenden Schiffsrümpfen (1, 1') ein in Bezug auf die Horizontale schräg in das Wasser ragender, mittels einer Endloskette oder eines -bandes (11) motorangetriebener, flüssigkeitsdurchlässiger Filterrechen (5) und ein an dessen aus dem Wasser ragenden oberen Ende in die Filterrechen-Elemente (5') eingreifende, gegenläufig rotierende Reinigungswalze (6), ein quer zur Laufrichtung des Filterrechens (5) waagerecht rotierendes Endlosförderband (12) zur Aufnahme und zum Abtransport in einen Sammelbehälter (13) der von dem Filterrechen (5) und/oder der Reinigungswalze (6) abfallender Feststoffe, ein Ölabscheidebehälter (9), dessen Überlaufkante (17) durch vorgelagerte Steuerschwimmer (8) in der Höhe veränderbar ist und der mit zwei Pumpsystemen ausgestattet ist, die einerseits für das aufgrund seiner größeren Dichte im unteren Ölabscheidebehälterraum gesammelte Wasser und andererseits eine Absaugvorrichtung für das darauf schwimmende Öl bzw. die zu beseitigende Flüssigkeit, vorgesehen sind.

2. Wasserfahrzeug nach Anspruch 1, dadurch gekennzeichnet, daß der Filterrechen (5) und der Ölabscheidebehälter (9) mit seiner Überlaufkante (17) vollständig über die Gewässeroberfläche, ggf. unabhängig voneinander schwenkbar bzw. hebbar sind.

3. Wasserfahrzeug nach Anspruch 2, dadurch gekennzeichnet, daß hydraulische Hubelemente zum Schwenken bzw. Heben des Filterrechens (5), der Überlaufkante (17) und des Ölabscheidebehälters (9) vorgesehen sind.

4. Wasserfahrzeug nach Anspruch 1, dadurch gekennzeichnet, daß der Filterrechen (5) im Arbeitseinsatz so angeordnet ist, daß seine Längsachse in einem Winkel von 30 bis 60 $^\circ$ zur Horizontalen geneigt ist.

5. Wasserfahrzeug nach Anspruch 1, dadurch gekennzeichnet, daß die Filterrechen-Elemente (5') austauschbar sind.

6. Wasserfahrzeug nach Anspruch 1, dadurch gekennzeichnet, daß die Umlaufgeschwindigkeit der Reinigungswalze (6) größer ist als die des Filterrechens (5).

7. Wasserfahrzeug nach Anspruch 1, gekennzeichnet durch einen Filterrechen (5) mit einer Umlaufgeschwindigkeit von 1,5 bis 3 m/min. und einer demgegenüber zumindest gleichgroßen Umlaufgeschwindigkeit der Reinigungswalze (6).

8. Wasserfahrzeug nach Anspruch 1, dadurch gekennzeichnet, daß die Reinigungswalze (6) dampfstrahlgeheizte Metallbürsten besitzt.

9. Wasserfahrzeug nach Anspruch 1, dadurch gekennzeichnet, daß die Überlaufkante (17) in mehrere Segmente (18) aufgeteilt ist, denen jeweils mindestens ein Steuerschwimmer (8) zugeordnet ist.

10. Wasserfahrzeug nach Anspruch 1, dadurch gekennzeichnet, daß als Pumpe für das Wasser im Ölabscheidebehälter (9) eine Propellerpumpe (14) verwendet wird, dem ein Kunststoffschaumbandfilter (15) vorgesetzt ist.

11. Wasserfahrzeug nach Ansprüchen 1 und 10, dadurch gekennzeichnet, daß der Kunststoffschaumbandfilter (15) ein rotierendes Kunststoffschaumband mit einer Abstreifvorrichtung (16) ist.

12. Wasserfahrzeug nach Anspruch 1, gekennzeichnet durch einen heizbaren Ölabscheidebehälter (9).

13. Wasserfahrzeug nach Anspruch 1, dadurch gekennzeichnet, daß am Bug der beiden Schiffsrümpfe (1, 1') ausfahrbare Leitbleche (3, 3') vorgesehen sind, welche die Ölsammelbreite des Wasserfahrzeugs über die Fahrzeugbreite vergrößern.

FIG. 1

FIG. 2

FIG.3

Europäisches
Patentamt

**EUROPÄISCHER RECHERCHENBERICHT**

0073365

Nummer der Anmeldung

EP 82 10 7164

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| | --- | | E 02 B 15/04 |
| A | FR-A-2 346 501 (BRIDGESTONE TIRE COMP.) * Seite 5, Zeile 1 - Zeile 18; Seite 7, Zeile 5 - Zeile 20; Figuren 1,7 * | 1 | |
| | --- | | |
| A | US-A-3 617 555 (I. GINSBURGH) * Spalte 1, Zeilen 40-68; Spalte 2, Zeilen 38-46; Spalte 2, Zeile 60 - Spalte 3, Zeile 16; Figuren 1-3 * | 1,4 | |
| | --- | | |
| A | WO-A-80/.00 466 (SANDVIK AKTIEBOLAG) * Insgesamt * | 1,2 | |
| | --- | | |
| A | GB-A-2 026 883 (JAN-BAR RETRIEVAL) * Seite 1, Zeilen 80-126; Figuren 1,2 * | 1,13 | RECHERCHIERTE SACHGEBIETE (Int. Cl. 3) |
| | --- | | E 02 B |
| A | GB-A-1 243 534 (W.H. SANDFORD) | | |
| | ----- | | |

Der vorliegende Recherchenbericht wurde für alle Patentansprüche erstellt.

| Recherchenort DEN HAAG | Abschlußdatum der Recherche 22-11-1982 | Prüfer CLASING M.F. |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82